# EUROPEAN PATENT APPLICATION

(11) **EP 2 216 932 A1**
(43) Date of publication of application: **11.08.2010**
(21) Application number: 07832685.7
(22) Date of filing: 28.11.2007
(51) Int. Cl.: H04L 7/02, H04L 12/44

(54) **BIT IDENTIFICATION CIRCUIT**

(71) Applicant: Mitsubishi Electric Corporation, Tokyo 100-8310 (JP)
(72) Inventor: KOZAKI, Seiji, Tokyo 100-8310 (JP); HOTTA, Yoshifumi, Tokyo 100-8310 (JP); TAKAHASHI, Akira, Tokyo 100-8310 (JP)
(74) Representative: Pfenning, Meinig & Partner GbR
(86) International application number: PCT/JP2007/072963
(87) International publication number: WO 2009/069205

(57) **Abstract**

A multiphase clock generating unit 121 that outputs multiphase clocks having a frequency corresponding to a highest bit rate among bit rates of input data signals, a phase selecting unit that samples the input data signals using the multiphase clocks and selects a sampled result, which is sampled at an optimal phase, out of a plurality of sampled results, a correcting unit that thins a part of bits of the sampled result selected by the phase selecting unit based on the difference in bit rates, and a rate selecting unit 127 that selects based on a selection signal for identifying the data signals and outputs one of an output of the correcting unit and an output of the phase selecting unit are included. When data having different bit rates is received as input data, digital signals corresponding to each of the bit rates are identified and reproduced in units of bits in a single circuit configuration.

## Description

### BIT IDENTIFICATION CIRCUIT

### TECHNICAL FIELD

The invention relates to a digital signal transmission system in a communication system, and particularly relates to a bit identification circuit that performs, in units of bits, identification and reproduction of a plurality of digital signals having different rates (bit rates) in a system in which a plurality of different transmission signals are time-division multiplexed in a burst manner.

### BACKGROUND ART

In order to perform bit identification of a signal inputs from a plurality of optical network units via a transmission medium at a high rate and with noise resistance, in a bit synchronization circuit disclosed in Patent Document 1, based on a reference clock having the same frequency as the bit rate of input data, multiphase clocks having different phases with the same period as the reference clock are generated. Then, the clock having an optimal phase for the bit identification is selected and the bit identification is performed. In the Patent Document 1, the input data is sampled using the multiphase clocks, a changing point of the input signal is detected based on sampled multiphase data, and a clock synchronized with the changing point of the input data is detected out of the multiphase clocks based on the detected result. Thus, the optimal phase for the bit identification is selected.

Patent Document 1: Japanese Patent Application Laid-Open No. 2007-043460

### DISCLOSURE OF INVENTION

### PROBLEM TO BE SOLVED BY THE INVENTION

The conventional bit synchronization circuit disclosed in the above-described Patent Document 1 is configured to generate the multiphase clocks from the reference clock having the frequency corresponding to the bit rate of the input data, configured to select the clock having the optimal phase out of the multiphase clocks and configured to perform using the selected clock retiming of the received data, i.e., the bit identification. Consequently, there is a problem in that the bit identification is not correctly performed when data of which the bit rate is different from that of the reference clock is received as the input data.

In order to avoid the problem, it is conceivable to separately provide the bit synchronization circuits for frequencies corresponding to the bit rates of the input data. In this case, however, there is a problem in that the circuit dimension and power consumption become large and the cost of the components increses.

The invention is achieved in consideration of the above, and an object thereof is to obtain a bit identification circuit, which realizes identification and reproduction of a digital signal corresponding to each bit rate in units of bits with a small circuit dimension and small power consumption in a single circuit configuration when data of different bit rates is received as the input data.

### MEANS FOR SOLVING PROBLEM

To solve the above problems and achieve the object, a bit identification circuit according to the invention to which a plurality of time-division multiplexed data signals of different bit rates are input to perform bit identification for each of the input data signals, includes: a multiphase clock generating unit that outputs multiphase clocks having a frequency, which is corresponding to a highest bit rate among the bit rates of the input data signals; a phase selecting unit that samples the input data signals using the multiphase clocks and selects a sampled result, which is sampled at an optimal phase, out of a plurality of sampled results; a correcting unit that thins a part of bits of the sampled result, which is selected by the phase selecting unit, based on a difference in bit rates; and a rate selecting unit that selects and outputs one of an output of the correcting unit and an output of the phase selecting unit based on a selection signal for identifying the data signals.

### EFFECT OF THE INVENTION

According to the present invention, a part of bits of the data signal of which the bit rate is lower than the highest bit rate is thinned based on the difference in bit rates. Thus, the bit identification of the input signals having a plurality of bit rates can be performed by the single circuit, and the circuit size can be made small and the power consumption can be reduced.

### BRIEF DESCRIPTION OF DRAWINGS

FIG. 1 is a block diagram illustrating a configuration example of a PON system that includes a bit identification unit in a first embodiment of the invention;
FIG. 2 is a block diagram illustrating a configuration of the bit identification unit of the first embodiment;
FIG. 3 is a timing diagram illustrating a high-rate sampled result when input data is 10.3125 Gbps and 10.0 Gbps;
FIG. 4 is a timing diagram illustrating output bits of a frequency difference bit correcting unit when bit rates of input data are 10.3125 Gbps, 10.0 Gbps and 1.25 Gbps;
FIG. 5 is a timing diagram illustrating a result of a thinning process when inputting the data of 1.25 Gbps;
FIG. 6 is a timing diagram illustrating a case in which a rate selecting unit operates based on rate information from outside of the bit identification unit as a rate selection signal in the first embodiment;
FIG. 7 is a timing diagram illustrating that rate determination is performed by detecting a burst overhead (OH) by a rate determining unit in the first embodiment;
FIG. 8 is a diagram illustrating a configuration example of a PON system including a bit identification unit in a second embodiment of the invention;
FIG. 9 is a block diagram illustrating a configuration of the bit identification unit of the second embodiment;
FIG. 10 is a timing diagram illustrating a case in which the rate selecting unit operates based on the rate information from outside of the bit identification unit as the rate selection signal in the second embodiment;
FIG. 11 is a timing diagram illustrating that the rate determination is performed by detecting the burst overhead (OH) by the rate detecting unit in the second embodiment;
FIG. 12 is a block diagram illustrating a configuration of a bit identification unit in a third embodiment of the invention;
FIG. 13 is a timing diagram illustrating a state in which a data signal of each bit rate is replaced on each clock rate; and
FIG. 14 is a timing diagram explaining operation of the third embodiment.

### EXPLANATIONS OF LETTERS OR NUMERALS

1 OLT
- 2-1, 2-2, 2-3: ONU
- 3: Optical fiber
- 4: Coupler
- 11: Optical receiver
- 12,: 12a, 12b Bit identification unit
- 13: SERDES unit
- 14: PON controlling unit
- 121: Multiphase clock generating unit
- 122: High-rate sampling unit
- 123: Edge detecting unit
- 124: Phase selecting unit
- 125: Frequency difference bit correcting unit
- 126: 1/N Thinning unit
- 127, 127a: Rate selecting unit
- 128: Rate determining unit
- 129: Selecting unit
- 130 to 132: Output interface

### BEST MODE(S) FOR CARRYING OUT THE INVENTION

Hereinafter, embodiments of a bit identification circuit according to the present invention are described in detail with reference to the accompanying drawings. Meanwhile, the invention is not limited to these embodiments.

### First Embodiment

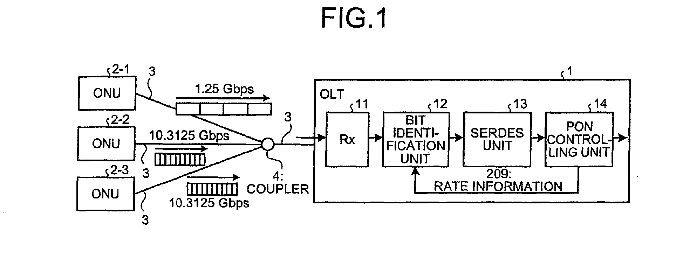

FIG. 1 is a configuration example illustrating a passive optical network (PON) system that includes a bit identification unit 12 according to a first embodiment of the invention. The PON system is a communication network using an optical fiber. In the PON system, a plurality of (three, in this example) terminal side devices (Optical Network Units: ONUs) 2-1, 2-2 and 2-3 as slave stations accommodating subscriber terminals (not shown) and a station side device (Optical Line Termination: OLT) 1 as a master station are connected by an optical fiber 3, which is an optical transmission medium, and a coupler 4.

Also, as shown in FIG. 1, the OLT 1 is provided with an optical receiver (Rx) 11 for converting an optical signal to an electric signal, a bit identification unit (clock data recovery: CDR) 12 for performing bit identification of the electric signal, a serializer/deserializer (SERDES) unit 13 for performing serial parallel conversion of the electric signal of which bit identification is performed, and a PON controlling unit 14 for making parallel data generated by the SERDES unit 13 a data frame and performing an identification process of the data frame, in the stated order from the optical fiber 3 connection side. Meanwhile, in FIG. 1, only a function of uplink communication (communication from the ONUs 2-1 to 2-3 to the OLT 1) is illustrated as a component of the OLT 1.

Herein, a configuration is considered in which the ONUs 2-1, 2-2 and 2-3 transmit data to the OLT 1 at a transmission rate of 1.25 Gbps, 10.3125 Gbps and 10.3125 Gbps, respectively, and input the data to the OLT 1 by using time-division multiplexing. That is to say, a system is supposed in which the OLT 1 identifies the data of two rates of 1.25 Gbps and 10.3125 Gbps to process.

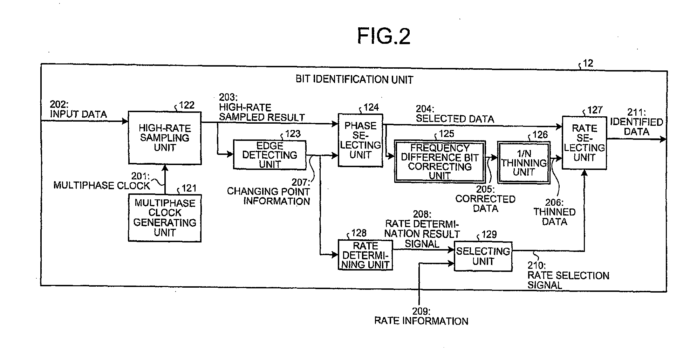

FIG. 2 is a block diagram illustrating a configuration of the bit identification unit 12. A multiphase clock generating unit 121 outputs multiphase clocks having a frequency corresponding to the highest bit rate among a plurality of data signals input from the ONUs 2-1 to 2-3. In this example, the multiphase clock generating unit 121 outputs multiphase clocks 201 of 10.3125 GHz. A high-rate sampling unit 122 performs sampling of input data 202 using the multiphase clocks 201. An edge detecting unit 123 detects a changing point of the input data 202 based on a plurality of high-rate sampled results 203 output from the high-rate sampling unit 122. A phase selecting unit 124 selects a phase to identify the input data 202 based on changing point information 207 detected by the edge detecting unit 123 and selects data from a plurality of high-rate sampled results 203 to output as selected data 204. The high-rate sampling unit 122, the edge detecting unit 123, and the phase selecting unit 124 serve as a phase selecting unit that samples an input data signal using the multiphase clocks and selects a sampled result having an optimal phase out of a plurality of sampled results.

A frequency difference bit correcting unit 125 discards a bit once for each M (natural number equal to or larger than 2) bits from a bit sequence of the selected data to output as corrected data 205. A 1/N thinning unit 126 further extracts a bit once for each N (natural number equal to or larger than 2) bits of the corrected data 205 and validates the extracted bits to output as thinned data 206. A thinning process of a part of bits based on the difference in bit rates is performed for the data signal of the bit rate lower than the highest bit rate by the frequency difference bit correcting unit 125 and the 1/N thinning unit 126. A rate determining unit 128 determines the bit rate of the input data 202 based on the changing point information 207 output by the edge detecting unit 123 to output a rate determination result signal 208. A selecting unit 129 selects the rate determination result signal 208 or rate information 209 from outside to output to a rate selecting unit 127 as a rate selection signal 210. The rate selection signal 210 is a signal for identifying a plurality of data signals of different bit rates. The rate selecting unit 127 switches the selected data 204 and the thinned data 206 based on the rate selection signal 210 to output as identified data 211.

In the bit identification unit 12 thus configured, operations from the high-rate sampling unit 122 to the phase selecting unit 124 is similar to that of the conventional bit synchronization circuit disclosed in the Patent Document 1. That is to say, it is determined that between which phases the changing point is present by using the high-rate sampled results 203 which has the number as the multiphase clocks 201 that is sampled by the high-rate sampling unit 122. A phase is selected that is sufficiently distant from the phases as an identification phase, the bit identification is performed in the optimal phase. Therefore, when the bit rate of 10.3125 Gbps is input, the selected data 204 output by the phase selecting unit 124 can be treated as the data of 10.3125 Gbps of which bit identification is stably performed.

Also, the frequency difference bit correcting unit 125 discards the bits a bit once for each M bits by setting M to 33 to output as the corrected data 205. That is to say, the frequency difference bit correcting unit 125 eliminates the bits at a rate of one per 33 bits of the selected data 204. In this example, since 32 bits out of 33 bits are output from the frequency difference bit correcting unit 125 as the corrected data 205, the bit rate of 10.3125 Gbps becomes 10.0 Gbps.

Further, the 1/N thinning unit 126 of a subsequent stage extracts the bits a bit once for each N bits with setting N to 8, to output as the thinned data 206. That is to say, the 1/N thinning unit 126 extracts one bit out of 8 bits of the corrected data 205 to output as the thinned data 206. In this example, since the bit rate of the data of 10.0 Gbps becomes one-eighth, the bit rate of the thinned data 206 becomes 1.25 Gbps.

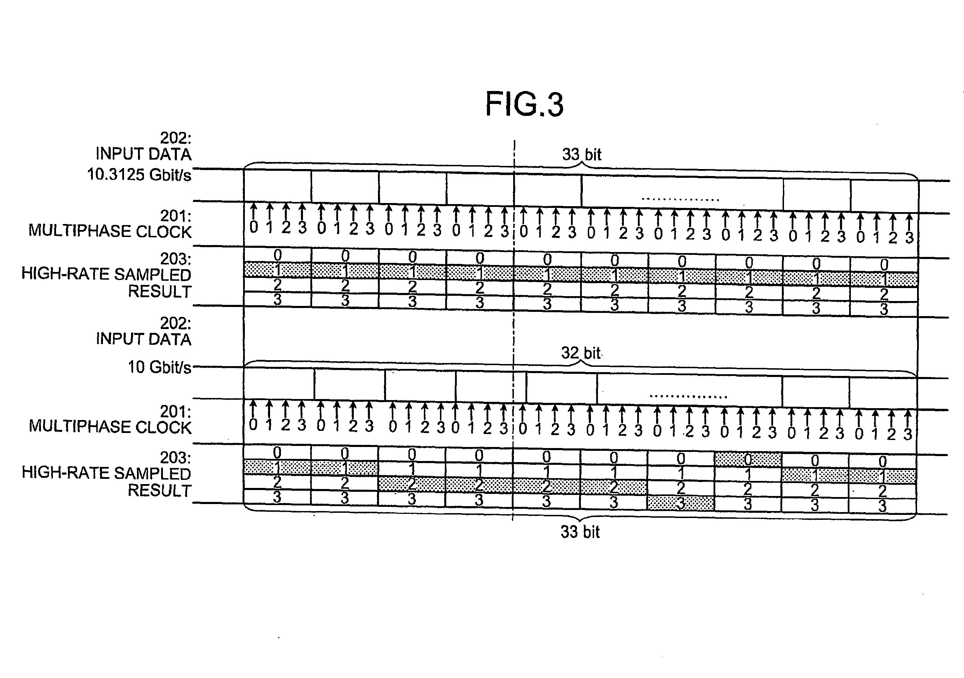

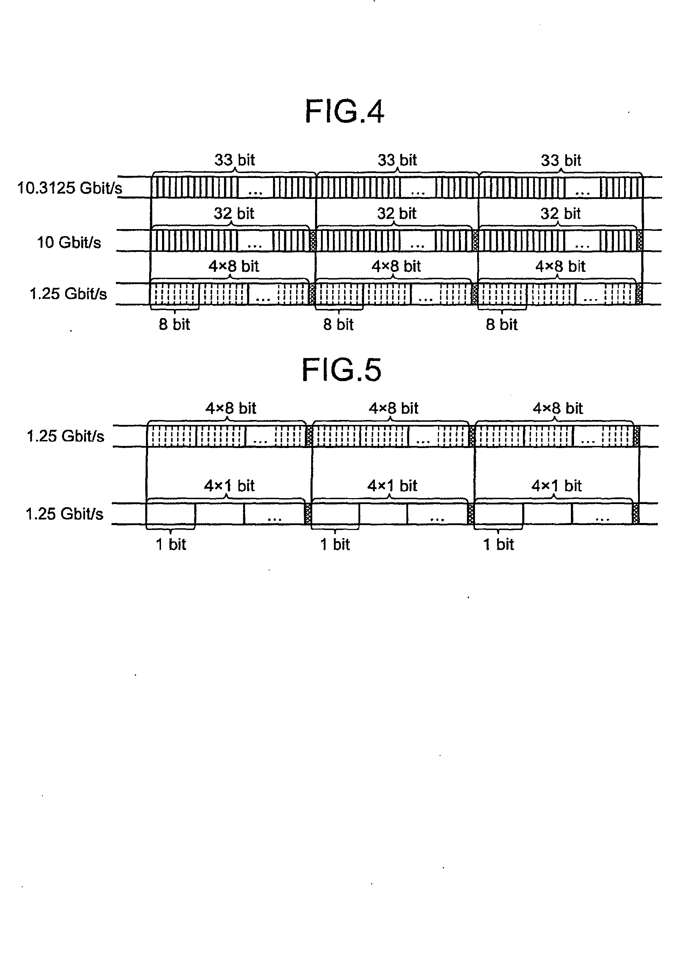

The operation of the frequency bit correcting unit 125 and the 1/N thinning unit 126 is further described with reference to FIGS. 3 and 4. The upper side of FIG. 3 shows the input data 202, the multiphase clock 201 and the high-rate sampled result 203 when the input data 202 is in 10.3125 Gbps. The lower side of FIG. 3 shows the input data 202, the multiphase clock 201 and the high-rate sampled result 203 when the input data 202 is in 10.0 Gbps. A case in which the multiphase clock generating unit 121 outputs 10.3125 GHz clock having four phases from phase 0 to phase 3 is shown. Numerals 0 to 3 in the high-rate sampled result represent results of sampling in phase 0 to phase 3 of the multiphase clock, respectively, and shaded portions represent the number corresponding to the phases selected by the phase selecting unit.

When the bit rate of the input data is 1.25 Gbps, a position of the changing point of the data detected by the edge detecting unit 123 is similar to that when the data at a bit rate of 10.0 Gbps is input. However, since the bit rate is one-eighth, a frequency of occurrence of the changing point also is one-eighth. Thus, when the input data is 1.25 Gbps, the edge detecting unit 123 and the phase selecting unit 124 operate as in the case where the data of 10.0 Gbps is input.

Since the multiphase clock used in the high-rate sampling unit 122 is 10.3125 GHz, when the data of 10.3125 Gbps is input, the phase of the multiphase clock and the phase of the input data remains constant and the changing point of the input data using the high-rate sampled result also remains constant, and the phase selected by the phase selecting unit 124 does not change. Since the changing point of the data is always between phase 3 and phase 0 in this drawing, phase 1 or phase 2 is selected by the phase selecting unit 124 (phase 1, in this example).

On the other hand, when the data of 10.0 Gbps is input, since the interval of the changing points of the data is long relative to the period of 10.3125 GHz, the position of the changing point relative to the multiphase clock gradually shifts backwards as in the drawing, and the position of the changing point unidirectionally changes from between phase 3 and phase 0 to between phase 0 and phase 1, then between phase 1 and phase 2. According to this, the phase selected by the phase selecting unit 124 is also changed as represented by the shaded portion in the drawing.

As described above, the bit of the shaded phase number out of the high-rate sampled results in FIG. 3 is the selected data by the phase selecting unit 124.

However, since the high-rate sampled result has information of 4 phases in the period of 10.3125 GHz, when 1 bit is selected in every period, 33 bits are selected within a time period in which 32 bits of data of 10.0 Gbps are input as shown in FIG. 3. Therefore, a redundant 1 bit is eliminated within the period of 33 bits by the frequency difference bit correcting unit 125 to obtain the identified data without excess and deficiency.

FIG. 4 is a view of an output bit of the frequency difference bit correcting unit 125 when the bit rates of the input data are 10.3125 Gbps, 10.0 Gbps and 1.25 Gbps. The bit in the shaded portion represents the bit eliminated by the frequency difference bit correcting unit 125. As shown in this drawing, in a case of 10.0 Gbps, the bits are eliminated at a rate of one per 33 bits, and in a case of 1.25 Gbps also, the process is similarly performed as the bit sequence of 10.0 Gbps in which the same code continues eight times.

Next, in the 1/N thinning unit 126, the bits are extracted at a rate of 1 bit per 8 bits out of the input corrected data to be output as the thinned data. At that time, the thinning process is performed without considering the bit eliminated by the frequency difference bit correcting unit 125. As a result, as shown in FIG. 5, when inputting the data of originally 1.25 Gbps, the sequence of 4x8 bits is output as if this is converted to 4x1 bit.

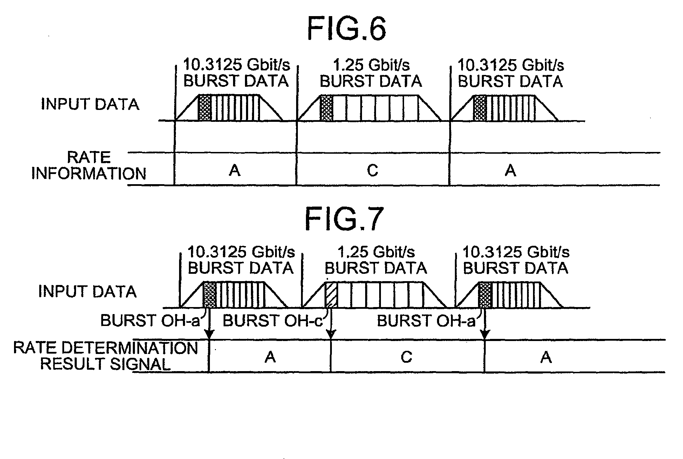

In the rate selecting unit 127, one of the selected data and the thinned data is selected based on the rate selection signal 210, which indicates the bit rate of the data now being processed, to be output as the identified data. As for the rate selection signal 210, two options exist by setting of the selecting unit 129. When the rate information 209 may be input from outside of the bit identification unit 12, selecting operation is performed using the signal from outside. Such a case is illustrated in FIG. 6. It is illustrated that the signal of 10.3125 Gbps is input when the rate information 209 is A, and the rate selecting unit 127 outputs the selected data as the identified data. Also, it is illustrated that the signal of 1.25 Gbps is input when the rate information 209 is C, and the rate selecting unit 127 outputs the thinned data as the identified data.

Since allocation of an uplink time slot for each of the ONUs 2-1 to 2-3 in the PON controlling unit 14 in FIG. 1 is known, a method of inputting the rate information 209 from outside of the bit identification unit 12 may be performed by outputting transmission rate information of the allocated ONU at a corresponding time slot time. When it is not possible to input the rate information 209 from outside of the bit identification unit 12 as in a case in which the PON controlling unit 14 of the OLT 1 does not hold the transmission rate information of each ONU, the rate determining unit 128 in the bit identification unit 12 is operated and the rate determination result signal 208 output from the rate determining unit 128 is selected by the selecting unit 129 to be output as the rate selection signal 210. In this case, the bit rate is determined based on the interval between the data changing points at a header of the input data, and also, as shown in FIG. 7, the rate is determined by inserting a pattern of a burst over head (OH), which is different for each bit rate, by the ONU at the transmission side and detecting the pattern.

When using the rate determining unit 128, there is an advantage that the transmission rate of the ONU is not necessarily managed by the PON controlling unit 14 of the OLT 1. On the contrary, when the rate is determined by the rate information from outside, it is not necessary to perform a determination process based on the burst header and the over head as described above. Thus, extra bit information may be eliminated and transmission efficiency is improved, and further, there is an advantage that power consumption and the like by the operation of the rate determining unit 128 may be reduced.

As described above, according to the first embodiment, since the frequency difference bit correcting unit 125 deletes a surplus bit corresponding to frequency difference between 10.3125 Gbps and 10.0 Gbps, and the 1/N thinning unit 126 adjusts an eightfold information amount between 10.0 Gbps and 1.25 Gbps, the bit identification of the input data of 1.25 Gbps becomes possible. Additionally, the bit identification of the input data of 10.3125 Gbps may also be achieved in the operation until the process of the phase selecting unit 124 has been performed. Thus, the bit identification of the input signal having two bit rates of 10.3125 Gbps and 1.25 Gbps may be performed in the same circuit by switching the rates at proper timing by the rate selection signal 210.

Meanwhile, in the rate determining unit 128, it is possible to configure to calculate a value of M in the frequency difference bit correcting unit 125 and a value of N in the 1/N thinning unit 126 by the bit rate, which is detected based on the changing point information 207 and the bit rate detected by identifying the pattern inserted to the burst over head (OH), and perform the thinning process of the bit based on the calculated values of M and N.

### Second Embodiment

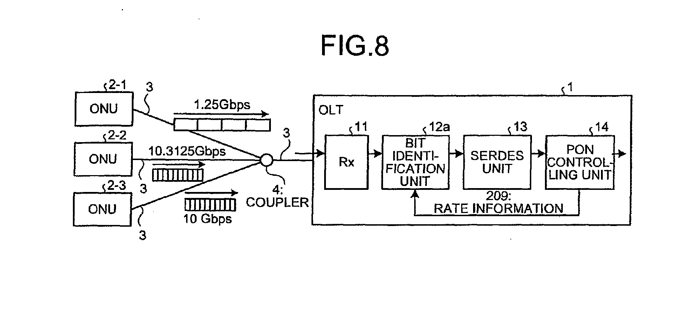

FIG. 8 is a configuration example illustrating a Passive Optical Network (PON) system according to a second embodiment of the invention. This configuration is different from that shown in FIG. 1 in that the transmission rate of transmitted data from the ONU 2-3 is 10.0 Gbps. The ONUs 2-1, 2-2 and 2-3 are configured to transmit the data to the OLT 1 at the transmission rates of 1.25 Gbps, 10.3125 Gbps and 10.0 Gbps, respectively, and time-division multiplex the data to input to an OLT 1a. That is to say, the OLT 1 is a system to identify the data of three rates of 1.25 Gbps, 10.0 Gbps and 10.3125 Gbps to process.

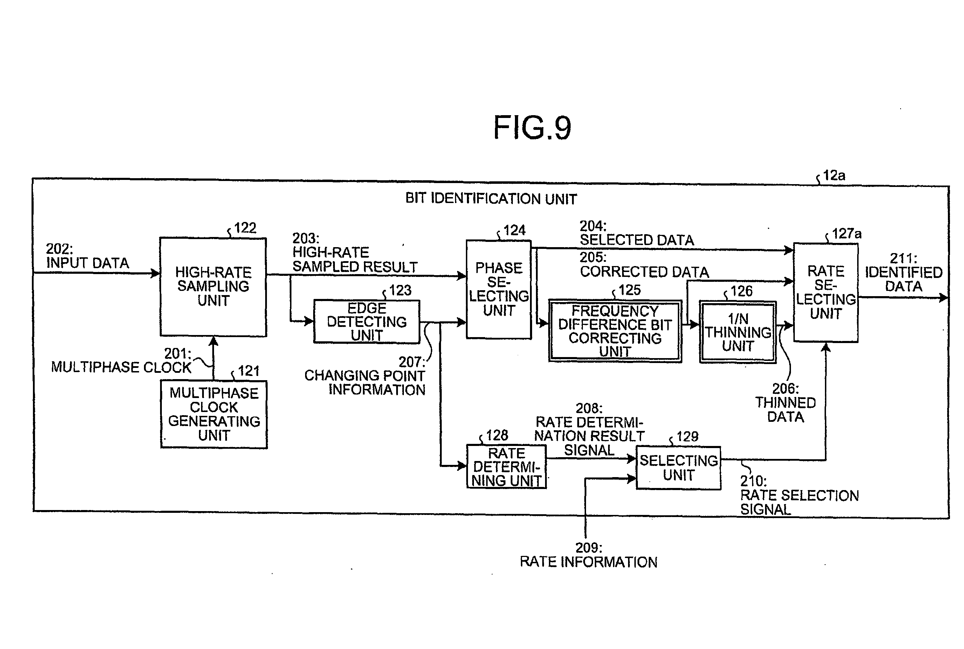

FIG. 9 is a block diagram illustrating a configuration of a bit identification unit 12a. This configuration is different from that shown in FIG. 2 in that the corrected data 205 by the frequency difference bit correcting unit 125 is input not only to the 1/N thinning unit 126 but also to a rate selecting unit 127a. The rate selecting unit 127a switches between the selected data 204 from the phase selecting unit 124, the corrected data 205 from the frequency difference bit correcting unit 125, and the thinned data 206 from the 1/N thinning unit 126 based on the rate selection signal 210 to output as the identified data 211.

In the case of the first embodiment, although the data of 10.0 Gbps is not actually input, the data of 1.25 Gbps is processed as in the case in which the data of 10.0 Gbps is input, and the bit rate is made one-eighth by the 1/N thinning unit 126, thereby reproducing the data of 1.25 Gbps. Therefore, according to the above-described configuration, even when the data of 10.0 Gbps is actually input, the operation until the frequency difference bit correcting unit 125 is similar, and the output from the frequency difference bit correcting unit 125 is a result obtained by identifying the data of 10.0 Gbps.

Although the rate selection signal 210 is the information for selecting from two kinds, which are 10.3125 Gbps and 1.25 Gbps, in the first embodiment, this is the information for selecting from three kinds in which 10.0 Gbps is added to them in the second embodiment. The rate selecting unit 127a selects the selected data 204, the corrected data 205, and the thinned data 206 when the input data 202 is 10.3125 Gbps, 10.0 Gbps and 1.25 Gbps, respectively, based on the information by the rate selection signal 210.

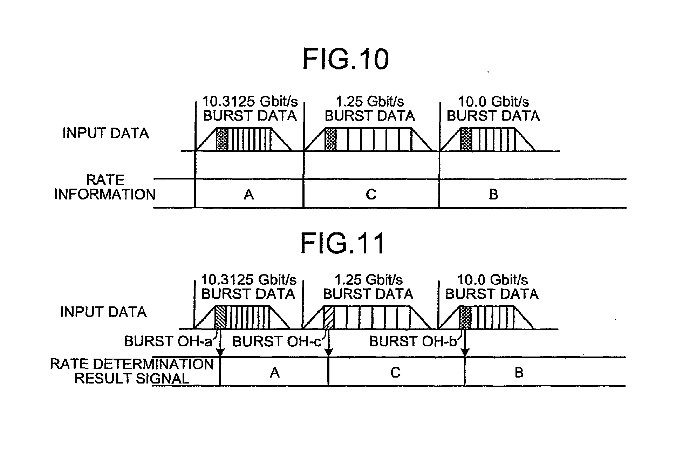

FIG. 10 is a timing diagram illustrating a case in which the rate selecting unit 127a operates based on the rate information 209 from outside of the bit identification unit 12a as the rate selection signal 210. Also, a case in which the rate determination result signal 208 is generated by detecting the burst over head (OH) by the rate determining unit 128 is shown in FIG. 11.

As described above, even when the data having three kinds of bit rates are multiplexed and input as in FIG. 8, all the data may be identified and reproduced by a single bit identification unit 12a.

### Third Embodiment

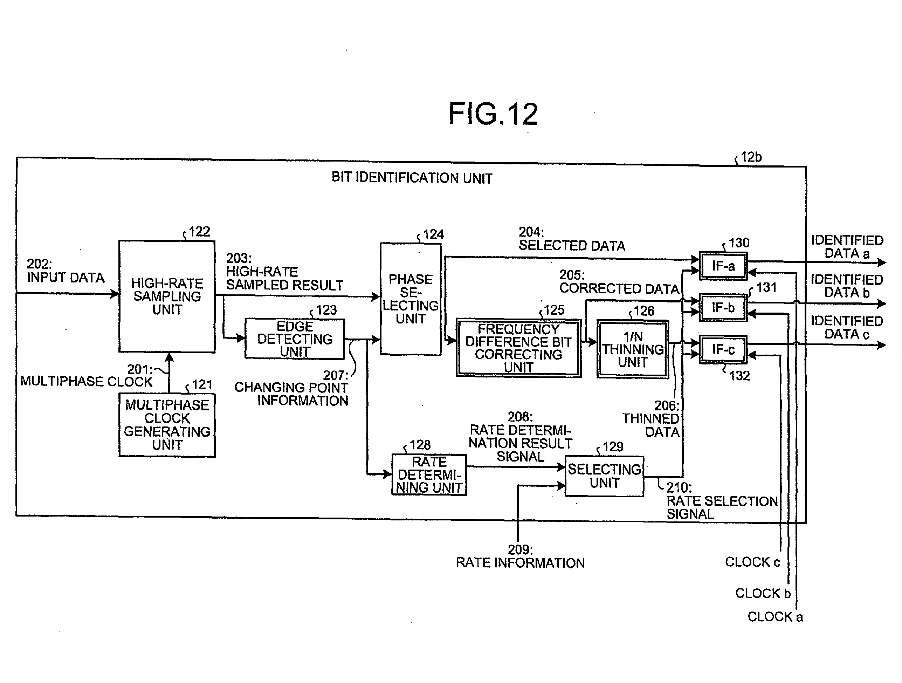

FIG. 12 is a block diagram illustrating a configuration of a bit identification unit 12b according to a third embodiment of the invention. This configuration is different from that shown in FIG. 9 in that blocks IF-a130, IF-b131 and IF-c132 as output interfaces are arranged in place of the rate selecting unit 127a, and it is configured that the selected data 204 is input to the IF-a130, the corrected data 205 is input to the IF-b131, the thinned data 206 is input to the IF-c132, and the rate selection signal 210 is input to all of the IF-a130, the IF-b131 and the IF-c132. Also, a clock signal a of 10.3125 GHz is input to the IF-a130, a clock signal b of 10.0 GHz is input to the IF-b131, and a clock signal c of 1.25 GHz is input to the IF-b132.

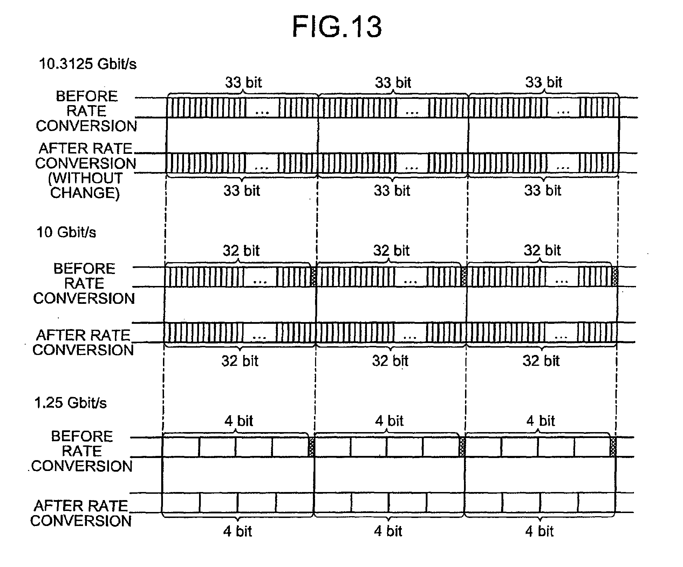

In FIG. 12, the IF-a130, the IF-b131 and the IF-c132 replace the selected data 204, the corrected data 205 and the thinned data 206 on the clock a (10.3125 GHz), the clock b (10.0 GHz) and the clock c (1.25 GHz) input thereto, respectively, delete an area of the discarded bit generated (marked) by the frequency difference bit correcting unit 125 to convert the data to the signal of each bit rate. However, the discarded bit is not processed in the IF-a130 and only clock replacement is performed. FIG. 13 illustrates a state in which the data signal at each bit date is replaced on each clock rate.

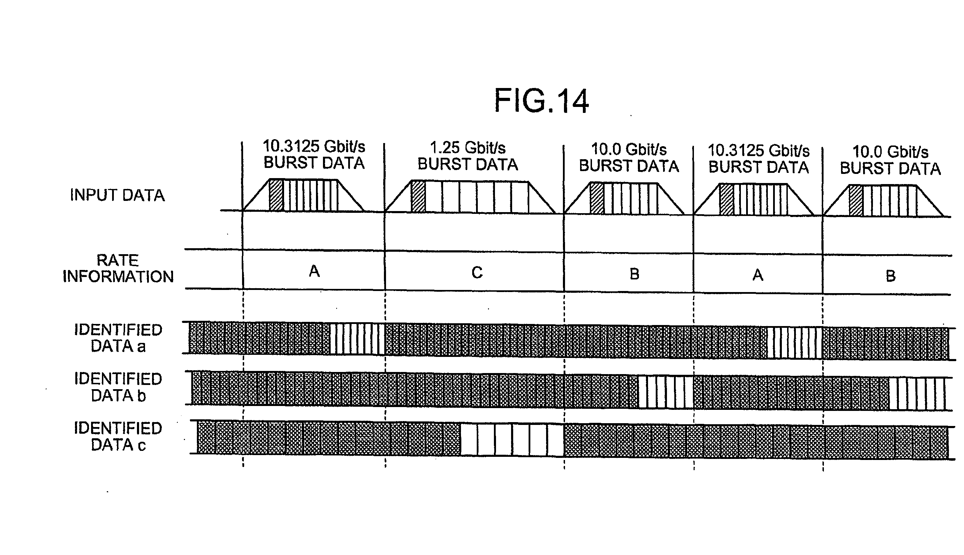

Next, the IF-a130, the IF-b131 and the IF-c132 Selects based on the rate selection signal 210 from the selecting unit 129 and outputs one of the input data as the identified data and an idle signal (indicating a data invalid section). FIG. 14 is a timing diagram explaining the above-described operation. For example, when the input data is a burst signal of 10.3125 Gbps, the signal indicating A is input as rate information, and the signal is input to the IF-a130, the IF-b131 and the IF-c132 as the rate selection signal 210.

Herein, in the IF-a130, although identified data a is output based on the selected data 204, the overhead, which is triangle portions before and after the burst data and a hatching portion in FIG. 14, is output as an idle signal being invalid data. The shaded portion in the identified data a, b and c in FIG. 14 is the idle signal. Also, in FIG. 14, there is time lag between the valid data other than the overhead portion in the burst data and the output identified data a, because there is a process delay.

On the other hand, in the IF-b131 and the IF-c132, since the rate information is A, it is judged that the data to be output is not input and the idle signal is output at each bit rate. Similarly, when the burst data of 1.25 Gbps is input, a signal indicating C is input as the rate information, a valid data portion in the burst data of 1.25 Gbps is transmitted as the output from the IF-c132, and the idle signal is output from the IF-a130 and the IF-b131. Similarly, when the burst data of 10.0 GHz is input, the signal indicating B is input as the rate information, the valid data portion in the burst data of 10.0 Gbps is transmitted as the output from the IF-b131 and the idle signals is output from the IF-a130 and the IF-c132.

As described above, according to the third embodiment, the input data having the three kinds of bit rates can be identified and reproduced using a single bit identification unit as in the second embodiment. Furthermore, when a subsequent-stage circuit is required for each of the rates of 10.3125 Gbps, 10.0 Gbps and 1.25 Gbps, it becomes possible to perform the processing by connecting the bit identification unit to each circuit.

Actually, in the OLT of the PON system and the like, as shown in FIG. 1, the serializer/deserializer (SERDES) unit 13 is arranged in the subsequent stage of the bit identification unit, and it is supposed that devices are different in 10.3125 Gbps and 1.25 Gbps due to difference in operation frequency and data format. In such a case, an extra device may be omitted in the third embodiment, and a small space for the device, small power consumption and low cost can be obtained.

### INDUSTRIAL APPLICABILITY

As described above, a bit identification method and a phase synchronization circuit according to the invention are useful in the communication system in which the data signals having different communication rates are time-division multiplexed, and particularly suitable for a next-generation PON system.

## Claims

1. A bit identification circuit to which a plurality of time-division multiplexed data signals of different bit rates are input to perform bit identification for each of the input data signals, comprising:
a multiphase clock generating unit that outputs multiphase clocks having a frequency, which is corresponding to a highest bit rate among the bit rates of the input data signals;
a phase selecting unit that samples the input data signals using the multiphase clocks and selects a sampled result, which is sampled at an optimal phase, out of a plurality of sampled results;
a correcting unit that thins a part of bits of the sampled result, which is selected by the phase selecting unit, based on a difference in bit rates; and
a rate selecting unit that selects and outputs one of an output of the correcting unit and an output of the phase selecting unit based on a selection signal for identifying the data signals.

2. The bit identification circuit according to claim 1, wherein
the correcting unit includes:
a frequency difference bit correcting unit that discards a bit once for each M (natural number equal to or higher than 2) bits; and
a thinning unit that extracts a bit once for each N (natural number equal to or larger than 2) bits from an output of the frequency difference bit correcting unit to validate the extracted bits.

3. The bit identification circuit according to claim 2, wherein
the rate selecting unit selects and outputs one of an output of the thinning unit and the output of the phase selecting unit based on the selection signal.

4. The bit identification circuit according to claim 2, wherein
the rate selecting unit selects and outputs one of an output of the frequency difference bit correcting unit, an output of the thinning unit and the output of the phase selecting unit based on the selection signal.

5. The bit identification circuit according to any one of claims 1 to 4, further comprising:
a rate determining unit that determines a bit rate of each of the data signals based on a result which is obtained by sampling the data signals of different bit rates using the multiphase clocks, wherein
the rate selecting unit performs the selecting operation using a determined result of the rate determining unit as the selection signal.

6. The bit identification circuit according to any one of claims 1 to 4, further comprising:
a rate determining unit that determines a bit rate of the input data signal based on information, which is given to the data signal at transmission side, for distinguishing the bit rates in the data signals, wherein
the rate selecting unit performs the selecting operation using a determined result of the rate determining unit as the selection signal.

7. The bit identification circuit according to any one of claims 1 to 4, wherein
the bit identification circuit is adopted in a master station in a PON system, in which the master station allocates a band to be used by a slave station and the slave station transmits data according to allocation, and performs bit identification of the data from the slave station input to the master station, and
the rate selecting unit performs the selecting operation based on the selection signal that is input based
on the allocation of the band used.

8. The bit identification circuit according to any one of claims 1 to 7, wherein the rate selecting unit includes a plurality of output interfaces for the respective data signals.
